# EUROPÄISCHE PATENTSCHRIFT

(11) **EP 0 876 753 B1**
(45) Veröffentlichungstag und Bekanntmachung des Hinweises auf die Patenterteilung: **19.06.2002**
(21) Anmeldenummer: 98104673.3
(22) Anmeldetag: 16.03.1998
(51) Int. Cl.: A01F 15/08, A01F 15/14

(54) **Vorrichtung und Verfahren zur Regelung der Ballenlänge in einer Grossballenpresse**
Apparatus and method for metering the bale lenght in a maxi baler
Appareil et méthode de réglage de la longueur des balles dans une presse du type à grosses bales

(30) Priorität: 05.05.1997 DE 19718831
(43) Veröffentlichungstag der Anmeldung: 11.11.1998
(73) Patentinhaber: Usines Claas France, 57141 Metz (FR)
(72) Erfinder: Mesmer, Denis, 57320 Bouzonville (DE); Hawlas, Martin, 33428 Harsewinkel (DE); Nonhoff, Ansgar, 48653 Coesfeld (DE); Scholz, Egbert, 33378 Rheda (DE)
(74) Vertreter: Weeg, Thomas

(56) Entgegenhaltungen:
- EP-A- 0 573 342
- DE-U- 29 511 023
- US-A- 2 778 295

## Beschreibung

Die Anmeldung betrifft eine Vorrichung sowie ein Verfahren zur Regelung der Ballenlänge in einer Großballenpresse, bestehend aus einer Aufnahmevorrichtung, einem Zuführkanal, einer Preßkammer mit einem Preßkolben sowie seitlichen Begrenzungen der Preßkammer, einer Vorrichtung zum Abbinden fertig gebildeter Ballen sowie einer Vorrichtung zur Bestimmung der Länge des gebildeten Erntegutstrangs, bestehend aus einem Meßrad und einem daran angeschlossenen elektronischen Sensor.

Eine solche Vorrichtung ist aus der DE 38 09 132 bekannt. Dort ist eine Vorrichtung erläutert, die die Hubanzahl des Preßkolbens als Meßgröße elektronisch erfaßt, zwischenspeichert und bei Erreichen einer voreingestellten Hubzahl als Maß für die Sollänge den Bindevorgang zum Abbinden des Erntegutballens auslöst. Diese vorgeschlagene Lösung arbeitet jedoch nur ungenau, da die bei einem Arbeitshub des Preßkolbens hinzugefügte Menge an Erntegut nicht unter allen Bedingungen auch dem Verfahrweg des Preßkolbens entspricht. So kann die Aufgabeportion schon bei der Aufgabe schmaler sein, oder der Ballen reexpandiert in die Richtung des Preßkolbens, wenn dieser zurückläuft, um die Zuführung der nächsten Aufgabeportion zu ermöglichen. Für den Benutzer der Vorrichtung kann eine ungenaue Balenlänge sehr ärgerlich sein, weil ein zu lang abgebundener Ballen eventuell nicht mehr auf seine Transportanhänger paßt oder er das theoretische Transportvolumen seines Anhängers nur teilweise ausnutzen kann. Bei der in der DE 34 36 883 beschriebenen Vorrichtung erweist es sich als nachteilig, daß das dort gezeigte Meßrad über Wellen eine Schaltstange antreiben muß. Durch die Antriebsfunktion des Meßrades läuft dieses relativ schwergängig und bleibt stehen, wenn der vom Meßrad abgefühlte Erntegutstrang im oberen Bereich weniger gut gefüllt ist und deshalb nicht genügend Energie zum Drehen des Zählrades überträgt. Auch kann das Meßrad wegen der anhängenden Antriebe nicht leicht federnd gelagert werden. Um diesen Nachteil zu überwinden, schlägt die EP 0 573 342 vor, an das Meßrad einen elektronischen Sensor anzuschließen. Um den Ungenauigkeiten, die sich aus der Vorwärts- und Rückwärtsbewegung des Ballens im Preßkanal ergeben, zu begegnen, ist dort vorgeschlagen, Zähne im Preßkanal vorzusehen, die den Rücklauf des Futters verhindern sollen. Abgesehen von der Verschlechterung der Förderbarkeit des Erntegutes neigt das Material, das nicht im Wirkbereich der Zähne liegt - insbesondere also das im Bereich des Meßrades liegende Erntegut - dazu, trotzdem zu reexpandieren, sodaß diese Vorrichtung keine zufriedenstellenden Meßergebnisse liefert. Schließlich wird in der DE 295 11 023 vorgeschlagen, nur die Bewegungen in Förderrichtung zu zählen, um eine ausreichende Präzision zu bekommen. Da der Ballen aber reexpandiert, ist die ermittelte Länge im Verhältnis zur wirklichen Länge zu gering.

Es ist Aufgabe der vorliegenden Erfindung, eine Vorrichtung und ein Verfahren zur Regelung bzw. Ermittlung der Ballenlänge so zu verbessern, daß sie möglichst präzise die eingestellte Ballenlänge sicherstellt.

Die Aufgabe wird gelöst, indem ein elektronisches Meßmittel anhand der Drehbewegung eines Meßrades die Vorwärts- und Rückwärtsbewegung eines Erntegutstranges mißt und an eine Auswertelektronik übermittelt, die die gemessenen Bewegungen eines Erntegutstrangs zu einem Ist-Längenwert addiert und bei annäherndem Erreichen des Soll-Längenwertes die Bindevorrichtung auslöst. Einerseits kann sich das Meßrad mit dem angeschlossenen elektronischen Meßmittel leicht drehen und deshalb jeder Bewegung des Erntegutstranges folgen, und andererseits ist durch die Addition jeder Bewegung vor- und rückwärts sichergestellt, daß alle möglichen Fehlerquellen durch Ausblenden einer Bewegungsrichtung oder durch die Längenermittlungen auf der Basis von Annahmen bei der Längenmessung vermieden werden. Weitere vorteilhafte Ausgestaltungen der erfindungsgemäßen Vorrichtung ergeben sich aus den Unteransprüchen. Hinsichtlich des Verfahrens kann die Aufgabe gelöst werden, indem die Sensormittel die Vor- und Rückwärtsbewegung des Erntegutstrangs erfassen, die Sensordaten an die Auswerteelektronik übermitteln, die Auswerteelektronik die Daten zur Vor- und Rückwärtsbewegung zu einem Ist-Längenwert aufaddiert und bei Annäherung des Ist-Längenwertes an den Soll-Längenwert die Bindung auslöst. Bei diesem Verfahren ist sichergestellt, daß die Bindung mit größtmöglicher Genauigkeit ausgelöst wird. Einige verfahrensmäßige vorteilhafte Ausgestaltungen, die sich aus der Verwendung der elektronischen Sensoren und der daran angeschlossenen Auswerteelektronik ergeben, sind ebenfalls in den Unteransprüchen genannt.

Die Erfindung wird nun anhand eines Ausführungsbeispiels näher erläutert. Es zeigen:
- Figur 1: eine Großballenpresse in der Seitenansicht,
- Figur 2: eine Detailansicht der Meßvorrichtung,

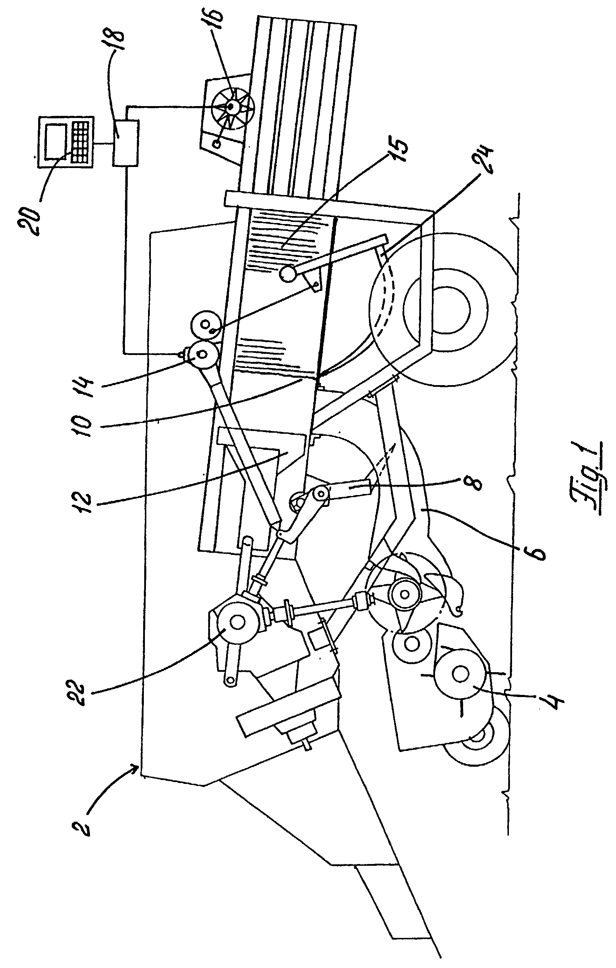

Figur 1 zeigt eine schematische Darstellung einer Großballenpresse 2 in der Seitenansicht. Über die Aufnahmevorrichtung 4 wird Erntegut vom Boden aufgenommen, in den Zuführkanal 6 abgegeben, dort von einem Förderer 8 in die Preßkammer 10 weiterbefördert und vom Preßkolben 12 gegen den sich bereits in der Preßkammer 10 befindlichen Erntegutstrang 15 gepreßt. Neben der Preßkraft, die der Preßkolben 12 gegen den Erntegutstrang 15 erzeugt, können zusätzlich schwenkbeweglich angeordnete Seitenwände eine zusätzliche Preßktraft auf das Erntegut ausüben. Erreicht der Erntegutstrang 15 eine vorgegebene Länge, wird die Bindeeinrichtung 14 betätigt und dadurch ein fertiger Ballen gebunden. Der fertige Ballen wird über eine Abgaberutsche auf dem Feld abgelegt. Die Länge des Erntegutstrangs 15 wird von einem Meßrad 16 abgefühlt. Das Meßrad 16 ist mit einer Auswerteelektronik 18 verbunden, die die Längenimpulse des Meßrades 16 empfängt und zu einem Ist-Längenwert der erreichten Länge eines Erntegutstrangs 15 aufaddiert. Erreicht der Ist-Längenwert annähernd den über eine Eingabevorrichtung 20 eingegebenen Soll-Längenwert, so schaltet die Auswerteelektronik 18 mit einem Signal eine Kupplung ein, durch die die Bindeeinrichtung 14 mit dem Knoter und der Bindenadel 24 mit dem Hauptgetriebe 22 antriebsverbunden wird. Die Eingabevorrichtung 20 kann entfernt, beispielsweise auf einem Schlepper, angeordnet sein und vorteilhaft über einen CAN-Bus Daten mit der Auswerteelektronik 18 austauschen. Die Bindenadel 24 fördert dann das Bindegarn durch den Erntegutstrang 15 zum Knoter, wo es gebunden und abgeschnitten wird. Der abgebundene Ballen weist auf diese Weise eine annähernd dem Soll-Längenwert entsprechende Ist-Länge auf.

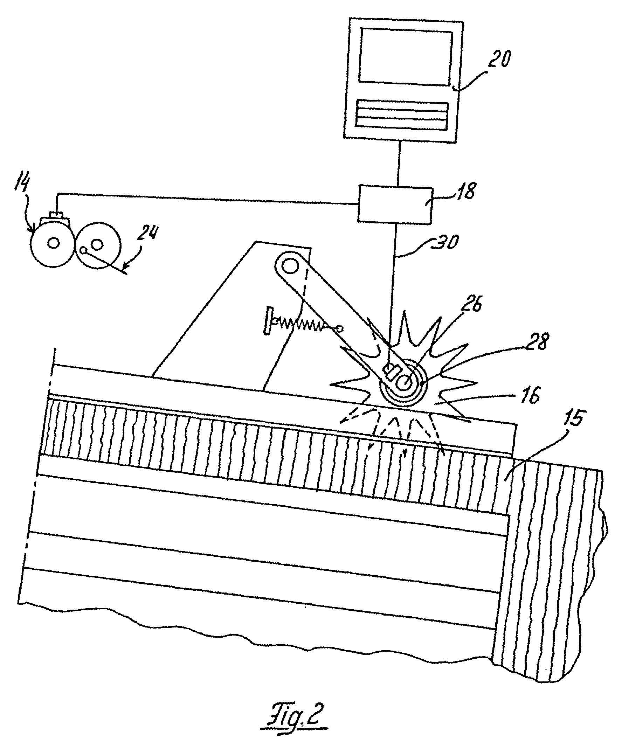

In Figur 2 ist eine Detailansicht des Meßrades 16 zu sehen. Die Spitzen des Meßrades 16 tauchen in den darunterliegenden Erntegutstrang 15 ein. Durch eine Vorwärts- oder Rückwärtsbewegung des Erntegutstrangs 15 wird das Meßrad 16 angetrieben. Das Meßrad 16 ist auf einer Welle 26 drehbar gelagert. Als Lager dient ein Sensorlager 28, das einen Impulsring oder eine optische Kennung aufweist, um durch Messung der relativen Winkelverschiebung der Sensor- bzw. Lagerringe zueinander Drehrichtung und Drehzahl des Meßrades 16 erkennen zu können. Wenn ein magnetischer Impulsring als Sensormittel eingesetzt wird, so enthält dieser eine Folge von Nord- und Südpolen und wirkt etwa wie ein Zahnkranz in einem magnetischen Feld. Der Sensorring ist beispielsweise am Lageraußenring befestigt. Bewegt sich der Innenring, dreht der Impulsring am Sensorring vorbei und erzeugt eine Änderung der Polarität des Magnetfelds. Der Sensor gibt dann einen Impuls ab, dessen Frequenz von der Anzahl der Polaritätsänderungen pro Sekunde abhängt. Es ist somit möglich, die Drehbewegung eines Rings gegenüber einem anderen zu messen, und zwar auch in Verhältniszahlen kleiner 1. Über das mit der Auswerteelektronik 18 verbundene Verbindungskabel 30 wird das Sensorsignal dorthin weitergeleitet, wo es dann ausgewertet wird zur gewünschten Information. Anstelle des magnetischen Impulsrings kann als Sensorlager auch ein sog. Inkrementalgeber eingesetzt werden. Der Inkrementalgeber kann beispielsweise mit einer optischen Gabellichtschranke arbeiten oder mit einem Hall-Element, das die Impulse aus der Drehbewegung aufnimmt und an die Auswerteelektronik 18 übermittelt. Die Sensoren können nach heutigem Stand der Technik ausgelegt sein auf 250 bis 500 Signale pro Umdrehung je nach eingesetztem Sensor, woraus sich eine hohe Genauigkeit der ermittelten Ist-Längenwerte ergibt. Bei den Inkrementalgebern kann durch einen Phasenversatz um beispielsweise 90° die Drehrichtung erkannt werden, bei den magnetisch arbeitenden Sensorsystemen aus der Abfolge der Polarität. Anstelle der hier beschriebenen Sensormittel können auch andere aus dem Stand der Technik bekannte Sensoren eingesetzt werden.

Der Vorteil der vorgeschlagenen Sensoranordnung besteht in einer geringen Anfälligkeit gegen Störungen und Verschmutzungen aufgrund der kompakten Bauweise sowie einer einfachen Montage und geringen Kosten. Die Integration des Sensors in das Lager veringert die Teilezahl. Durch die gleichzeitige Ermittlung und Addition der Vorwärts- und Rückwärtsbewegung kann auf Oberflächenelemente, die die Reexpansion im Preßkanal verhindern sollen, verzichtet werden, ohne dadurch eine geringere Genauigkeit akzeptieren zu müssen.

Aus der elektronischen Auswertung der Sensorsignale ergeben sich Vorteile bei einem Verfahren zur Ermittlung der Länge eines Erntegutstrangs. So kann durch das vorgeschlagene Verfahren sichergestellt werden, daß die fertigen Ballen eine vorgegebene Länge nicht überschreiten, und auch dann, wenn durch Betätigung des Ballenausdrückers der Preßkanal zunächst leer ist und das Meßrad 16 keinen Impuls bekommt, der erste fertige Ballen die gewünschte Länge aufweist.

## Patentansprüche

1. Vorrichtung zur Regelung der Ballenlänge in einer Großballenpresse, bestehend aus einer Aufnahmevorrichtung, einem Zuführkanal, einer Preßkammer mit einem Preßkolben und seitlichen Begrenzungen der Preßkammer, sowie einer Vorrichtung zum Abbinden fertig gebildeter Ballen, bestehend aus einem Meßrad sowie einem daran angeschlossenen elektronischen Sensor,
**dadurch gekennzeichnet, daß** ein elektronisches Meßmittel (28) anhand der Drehbewegung eines Meßrades (16) die Vorwärts- und Rückwärtsbewegung eines Erntegutstranges (15) mißt und an eine Auswerteelektronik (18) übermittelt, die die gemessenen Bewegungen des Erntegutstranges (15) zu einem Ist-Längenwert addiert und bei annäherndem Erreichen des Soll-Längenwertes die Bindevorrichtung (14, 24) auslöst.

2. Vorrichtung nach Anspruch 1,
**dadurch gekennzeichnet, daß** als Meßsensor für die Drehbewegung des Meßrades (16) ein mittelbar oder unmittelbar mit dem Meßrad (16) antriebsverbundenes Sensorlager (28) eingesetzt ist.

3. Vorrichtung nach Anspruch 1 oder 2,
**dadurch gekennzeichnet, daß** die Soll-Längenwert-Einstellung über eine Eingabevorrichtung (20) fernbedienbar ist.

4. Verfahren zur Ermittlung der Länge eines Erntegutstrangs (15) durch eine Auswerteelektronik (18), bestehend aus den Schritten:
- Erfassen der Drehbewegung eines Meßrades (16) über Sensormittel (28),
- Addieren der gemessenen Vorwärtsbewegung,
- Auslösen der Bindung (14, 24) bei Erreichen des vorgegebenen Soll-Längenwertes,
**dadurch gekennzeichnet,**
**daß** die Sensormittel (28) die Vorwärts- und Rückwärtsbewegung des Erntegutstrangs (15) erfassen, an die Auswerteelektronik (18) übermitteln, die Auswerteelektronik (18) die Daten zur Vorwärts- und Rückwärtsbewegung zu einem Ist-Längenwert aufaddiert und bei Annäherung des Ist-Längenwertes an den Soll-Längenwert die Bindung (14, 24) auslöst.

5. Verfahren nach Anspruch 4,
**dadurch gekennzeichnet, daß** die Auswerteelektronik (18) nach Beendigung eines Preßhubes des Preßkolbens (12) dem errechneten Ist-Längenwert einen angenommenen Längenwert, um den der Erntegutstrang während des nächsten Preßhubes länger wird, hinzuaddiert, mit dem Soll-Längenwert vergleicht und bei einer Überschreitung des Soll-Längenwertes durch den Ist-Längenwert mit dem hinzuaddierten angenommenen Längenwert die Bindung (14,24) auslöst.

6. Verfahren nach Anspruch 4 oder 5,
**dadurch gekennzeichnet, daß** die Auswerteelektronik nach Betätigung eines Ballenausdrückers und erstem Meßimpuls durch einen Sensor (28) dem ersten Längen-Istwert einen Wert hinzuaddiert, der dem Abstand zwischen Eintauchpunkt der Bindenadel (24) in den Preßkanal (10) und der Position des Meßrades (16) entspricht.

7. Verfahren nach einem oder mehreren der Ansprüche 4 bis 6,
**dadurch gekennzeichnet,**
**daß** dann, wenn zuletzt der Ballenausdrücker betätigt worden ist und der Soll-Längenwert niedriger ist als der Abstand zwischen dem Eintauchpunkt der Bindenadel (24) in den Preßkanal (10) und der Position des Meßrades (16), die Auswerteelektronik (18) zur Bestimmung des Ist-Längenwertes einen angenommenen Längenwert pro einzelnem Arbeitshub des Preßkolbens (10) zum gebildeten Ist-Längenwert addiert.

## Claims

1. Apparatus for regulating the bale length in a big bale press, comprising a pick-up device, a feed passage, a pressing chamber having a pressing piston and lateral boundary means for the pressing chamber, and a device for binding off bales in the finished formed condition, comprising a measuring wheel and an electronic sensor connected thereto, **characterised in that** on the basis of the rotary movement of a measuring wheel (16) an electronic measuring means (28) measures the forward and rearward movement of a line (15) of crop material and communicates same to an electronic evaluation means (18) which adds the measured movements of the line (15) of crop material to afford an actual length value and triggers the binding device (14, 24) when the reference length value is approximately reached.

2. Apparatus according to claim 1 **characterised in that** a sensor bearing (28) which is directly or indirectly drivingly connected to the measuring wheel (16) is used as the measuring sensor for the rotary movement of the measuring wheel (16).

3. Apparatus according to claim 1 or claim 2 **characterised in that** setting of the reference length value is remotely operable by way of an input device (20).

4. A method of ascertaining the length of a line of crop material (15) by an electronic evaluation means (18), comprising the steps:
- detecting the rotary movement of a measuring wheel (16) by way of sensor means (28),
- adding the measured forward movement, and
- triggering off the binding operation (14, 24) when the predetermined reference length value is reached,
**characterised in that**
the sensor means (28) detect the forward and rearward movement of the line (15) of crop material and communicate same to the electronic evaluation means (18), and the electronic evaluation means (18) adds the data relating to the forward and rearward movement to afford an actual length value and triggers off the binding operation (14, 24) when the actual length value approximates to the reference length value.

5. A method according to claim 4 **characterised in that** after the termination of a pressing stroke movement of the pressing piston (12) the electronic evaluation means (18) adds to the calculated actual length value an assumed length value by which the line of crop material becomes longer during the next pressing stroke movement, compares it to the reference length value and, if the reference length value is exceeded by the actual length value with the assumed length value added thereto, triggers the binding operation (14, 24).

6. A method according to claim 4 or claim 5 **characterised in that** after actuation of a bale expulsion device and a first measuring pulse by a sensor (28) the electronic evaluation means adds to the first actual length value a value which corresponds to the spacing between the point of insertion of the binding needle (24) into the pressing passage (10) and the position of the measuring wheel (16).

7. A method according to one or more of claims 4 to 6 **characterised in that** when finally the bale expulsion device has been actuated and the reference length value is less than the spacing between the point of insertion of the binding needle (24) into the pressing passage (10) and the position of the measuring wheel (16), the electronic evaluation means (18) for ascertaining the actual length value adds an assumed length value per individual working stroke movement of the pressing piston (10) to the actual length value formed.

## Revendications

1. Dispositif pour le réglage de la longueur des balles dans une presse à grosses balles, comprenant un dispositif de ramassage, un canal d'alimentation, une chambre de compression avec un piston de compression et des parois latérales de chambre de compression, ainsi qu'un dispositif pour lier les balles terminées, comprenant une roue de mesure et un capteur électronique connecté à celle-ci, **caractérisé en ce qu'**un moyen de mesure (28) électronique, sur la base de la rotation d'une roue de mesure (16), mesure les déplacements vers l'avant et vers l'arrière d'un masse de produit récolté (15) et les transmet à une électronique de traitement (18), qui additionne les déplacements mesurés dudit produit récolté (15) pour former une valeur de longueur réelle et déclenche le dispositif de liage (14, 24), lorsqu'une valeur de longueur de consigne est sensiblement atteinte.

2. Dispositif selon la revendication 1, **caractérisé en ce qu'**on utilise comme capteur de mesure pour la rotation de la roue de mesure (16), un palier-détecteur (28), qui est lié directement ou indirectement sur le plan de l'entraînement à la roue de mesure (16).

3. Dispositif selon la revendication 1 ou 2, **caractérisé en ce que** le réglage de la valeur de longueur de consigne peut être commandé à distance par l'intermédiaire d'un dispositif d'entrée (20).

4. Procédé pour déterminer la longueur d'une masse de produit récolté (15) à l'aide d'une électronique de traitement (18), comportant les étapes suivantes :
- mesure de la rotation de la roue de mesure (16) à l'aide de capteurs (28),
- addition des déplacements vers l'avant
- déclenchement du liage (14, 24) lorsque la valeur de longueur de consigne prédéterminée est atteinte,
**caractérisé en ce que**
les capteurs (28) détectent le déplacement vers l'avant et vers l'arrière de la masse de produit récolté (15) et le transmettent à l'électronique de traitement (18), **en ce que** l'électronique de traitement (18) additionne les données pour le déplacement vers et vers l'arrière pour former une valeur de longueur réelle et déclenche le liage (14, 24), lorsque la valeur de longueur réelle se rapproche de la valeur de longueur de consigne.

5. Procédé selon la revendication 4, **caractérisé en ce que** l'électronique de traitement (18), à la fin d'une course de compression du piston de compression (12) ajoute à la valeur de longueur réelle calculée, une valeur de longueur supposée, de laquelle la masse de produit récolté s'allonge à la course suivante, la compare à la valeur de longueur de consigne et, en cas de dépassement de la valeur de longueur de consigne par la valeur de longueur réelle majorée de la valeur de longueur supposée, déclenche le liage (14, 24).

6. Procédé selon la revendication 4 ou 5, **caractérisé en ce que** l'électronique de traitement, après actionnement d'un éjecteur de balle et une première impulsion de mesure d'un capteur (28), ajoute à la première valeur de longueur réelle une valeur qui correspond à la distance entre le point de pénétration de l'aiguille de liage (24) dans le canal de compression (10) et la position de la roue de mesure (16).

7. Procédé selon une ou plusieurs des revendications 4 à 6, **caractérisé en ce que**, lorsque l'éjecteur de balle a été actionné et que la valeur de longueur réelle est inférieure à la distance entre le point de pénétration de l'aiguille de liage (24) dans le canal de compression (10) et la position de la roue de mesure (16), l'électronique de traitement (18), pour déterminer la valeur de longueur réelle, ajoute une valeur de longueur supposée à chaque course de travail du piston de compression (12) pour former la valeur de longueur réelle.
